# EUROPÄISCHE PATENTSCHRIFT

(11) **EP 1 268 161 B1**
(45) Veröffentlichungstag und Bekanntmachung des Hinweises auf die Patenterteilung: **14.07.2004**
(21) Anmeldenummer: 01915397.2
(22) Anmeldetag: 21.03.2001
(51) Int. Cl.: B29C 49/42, B65G 47/84

(54) **VERFAHREN ZUM WENDEN VON BLAS-VORFORMIGEN IN EINEM EINLAUFSTERN UND EINLAUFSTERN**
METHOD FOR ROTATING BLOW-MOULDING PREFORMS IN A STAR-SHAPED FEED DEVICE AND A STAR-SHAPED FEED DEVICE
PROCEDE POUR FAIRE PIVOTER DES EBAUCHES DE SOUFFLAGE DANS UN DISPOSITIF D'ALIMENTATION EN ETOILE, ET DISPOSITIF D'ALIMENTATION EN ETOILE

(30) Priorität: 05.04.2000 DE 10017050
(43) Veröffentlichungstag der Anmeldung: 02.01.2003
(73) Patentinhaber: KRONES AG, 93068 Neutraubling (DE)
(72) Erfinder: PÖLLINGER, Claus, 93149 Nittenau (DE); STREBL, Manfred, 93142 Maxhütte (DE); LEX, Peter, 93073 Neutraubling (DE); GMEINER, Franz, 93161 Sinzing (DE); PENNINGER, Josef, 94167 Tettenweis (DE)
(86) Internationale Anmeldenummer: PCT/EP2001/003238
(87) Internationale Veröffentlichungsnummer: WO 2001/076850

(56) Entgegenhaltungen:
- DE-A- 3 837 118
- DE-U- 29 716 268
- US-A- 4 355 968
- US-A- 4 929 450
- US-A- 5 116 217

## Beschreibung

Die Erfindung betrifft ein Verfahren gemaß dem Oberbegriff des Anspruchs 1 und einem Einlaufstern gemäß dem Oberbegriff des Anspruchs 4.

Bei der Streckblasformung beispielsweise von Getränkebehältern, typischerweise PET-Flaschen, werden die Vorformlinge aus einem ungeordneten Massenstrom vereinzelt an einen Einlaufstern übergeben und von diesem beispielsweise zu einer Heizstation und/oder einer Streckblasstation überführt. Der Einlaufstern trägt die Vorformlinge zunachst in Hängelange und wendet sie für die nachfolgenden Bearbeitungsschritte in eine Uberkopflage. In der Praxis ist es bekannt, jeden Vorformling mit einem Arm zu wenden, der um eine zur Drehachse des Einlaufsterns senkrechte, horizontale Achse schwenkt. Dies bedingt einen in Richtung der Drehachse hohen Bewegungsraum für die Arme und die Vorformlinge und eine maschinentechnisch schwierig zu beherrschende Höhenversetzung zwischen dem Übernahmebereich und dem Übergabebereich der Vorformlinge.

Aus DE-A-2 953 570 ist es bekannt, die in Hängelage übernommenen Vorformlinge in einem vier Halter aufweisenden Einlaufstern in die Überkopflage zu wenden und einen weiteren Stern nachzuordnen, der die Vorformlinge in Überkopflage übernimmt und an eine Zuführeinrichtung zu Heiz- und Blasvorrichtungen übergibt. Dieses Konzept bedingt maschinentechnisch hohen Aufwand und beschränkt die Durchlaufrate der Vorformlinge.

Aus DE-C-3 837 118 ist es bekannt, die Vorformlinge in Hängelange zu übernehmen und in derselben Hängelage mit einem Einlaufstern zu diesen tangierenden Bearbeitungsstationen zu fördern, wobei der Einlaufstern aufwendige Mechanismen enthält, um die Vorformlinge zumindest bereichsweise in Förderwegabschnitten zu bewegen, die keiner Kreisbahn um die Drehachse des Einlaufsterns folgen. Dabei wird auch der in Drehrichtung gesehene Abstand zwischen benachbarten Vorformlingen verändert.

Der Erfindung liegt die Aufgabe zugrunde, ein Verfahren der eingangs genannten Art sowie einen Einlaufstern zum Durchführen des Verfahrens anzugeben, mit den maschinentechnisch einfach eine hohe Förderrate für die Vorformlinge erzielbar ist.

Die gestellte Aufgabe wird verfahrensgemaß mit den Merkmalen des Anspruchs 1 und vorrichtungsgemäß mit den Merkmalen des Anspruchs 4 gelöst.

Da verfahrensgemäß im Einlaufstern nicht nur jeder Vorformling um die im wesentlichen radiale Wendeachse gewendet wird und für den Wendevorgang in Richtung der Drehachse relativ niedriger Bewegungsraum ausreicht, und auch der Abstand Drehrichtung so verändert wird, dass jeder Wendevorgang problemlos durchführbar ist, sondern auch den Abstandsgegebenheiten im Übernahmebereich und im Übergabebereich individuell Rechnung getragen wird, lässt sich der Einlaufstern mit einer großen Zahl von Vorformlingen bestücken. Die Durchsatzrate an Vorformlingen ist hoch. Es sind keine extrem hohen Geschwindigkeiten oder krasse Geschwindigkeitsänderungen erforderlich, so dass für die zeitlich aufeinander abgestimmten unterschiedlichen Bewegungsvorgänge jeweils genügend Zeit bzw. ein genügend großer Drehwinkel des Einlaufsterns nutzbar ist. Der Einlaufstern erfüllt sogar eine Mehrfachfunktion, weil er die Vorformlinge direkt übernimmt, wendet und auch direkt an eine nachfolgende Bearbeitungsstation übergibt, ohne dazu platzbeanspruchende, maschinentechnisch aufwendige oder zusätzliche Hilfsvorrichtungen einsetzen zu müssen. Da trotz hoher Durchsatzrate für die Bewegungsabläufe bei der Übernahme, beim Wenden und bei der Übergabe jeweils relativ viel Zeit zur Verfügung steht, ist eine sehr exakte Bewegungssteuerung mit maschinentechnisch vertretbarem Aufwand möglich. Selbst bei Dauerbetrieb treten keine lokalen Extrembelastungen auf, die zu frühzeitigen Verschleißerscheinungen führen. Die Behandlung der Vorformlinge ist schonend. Besonders zweckmäßig lässt sich der Übergabebereich im wesentlichen auf derselben Höhe anordnen wie der Übergabebereich, was eine bauliche Vereinfachung der Gesamtanlage ermoglicht, in welche der Einlaufstern integriert ist.

In dem Einlaufstern werden die Vorformlinge um die im wesentlichen zur Drehachse radialen Wendeachsen gewendet. Ferner lässt sich der Einlaufstern durch die Verstellvorrichtung an die zwischen den Vorformlingen gegebenen Abstände im Übernahmebereich anpassen. Dies bedeutet, dass jeder Halter trotz gegebener Drehzahl des Einlaufsterns vorübergehend mit einer Umlaufgeschwindigkeit bewegt werden kann, die der Umfangsgeschwindigkeit der Vorformlinge im Übernahmebereich entspricht. Ahnlich lässt sich auch die Bewegung jedes Halters im Übergabebereich unabhängig von der Drehzahl des Einlaufsterns vorübergehend an die erforderliche Geschwindigkeit in der nachfolgenden Arbeitsstation anpassen. Dadurch ergeben sich korrekte Übernahme- und Übergabeverhältnisse für die Vorformlinge, wodurch sich die Fehler- oder Beschädigungsquote bei der Übernahme und bei der Übergabe reduzieren lässt. Die Vorformlinge bleiben im gesamten Förderweg vom Übernahmebereich bis in den Übergabebereich zu keiner Zeit sich selbst überlassen. Die unterschiedlichen Bewegungsabläufe beim Verändern der Abstände und beim Wenden lassen sich in dem rotierenden Einlaufstern maschinentechnisch günstig kombinieren und führen zu einem zweckmäßig geringen oder zu gar keinem Höhenversatz zwischen dem Übernahmebereich und dem Übergabebereich.

Wird verfahrensgemäß zusätzlich auch der Radialabstand jedes Vorformlings von der Drehachse verändert, dann kann die Bewegungsbahn jedes Vorformlings vorübergehend von der Kreisbahn im Einlaufstern abweichen. Auf diese Weise lassen sich die Übergabe und die Übernahme korrekt steuern und für die Vorformlinge schonend durchführen.

Zweckmäßig wird der Abstand vom Übernahme-Abstandswert auf den Wendeabstandswert vergrößert und anschließend wieder auf den Übergabe-Abstandswert verkleinert. Daraus ergeben sich vorübergehende Verzögerungen bzw. Beschleunigungen.

Im Einlaufstern steht genügend Platz zur Verfügung, die Verstellvorrichtung als eine Kombination eines Schwenksteuerverstellmechanismus und eines Radialverstellmechanismus für die Halter auszubilden. An dem stationären Steuerkurvenpaar werden über die Folgeglieder aus der Rotationsbewegung des Einlaufsterns die Schwenksteuer- und die Radialverstell-Bewegungen abgeleitet. Diese Bewegungen laufen ohne krasse Geschwindigkeitsänderungen oder Schläge ab, was einerseits eine schonende Behandlung für die Vorformlinge bedeutet und andererseits frühzeitigen Verschleiß zwischen den relativ zueinander bewegten Komponenten vermeidet.

Auch der Wendesteuermechanismus mit seinem stationären Wendesteuer-Kurvenpaar und den Folgegliedern, vorzugsweise Rollensternen, führt die Wendebewegungen harmonisch und ohne krasse Geschwindigkeitsänderungen aus, wobei diese Bewegungen aus der Rotationsbewegung des Einlaufsterns abgeleitet werden.

Bei einer maschinentechnisch einfachen und funktionssicheren Ausführungsform wird die Rotationsbewegung der Trägerscheibe des Einlaufsterns auf Geradführungen übertragen, in denen die Halter tragende Arme verschiebbar sind. Zum Ändern der Abstände zwischen den Vorformlingen werden die Geradführungen um ihre Schwenkachsen verschwenkt. Radiale Verstellbewegungen für jeden der Halter werden über das Radialkurvenfolgeglied auf den Arm übertragen. Die Steuerkurven des Wende-Steuerkurvenpaares besitzen Gleitflächen, die die für die Abstandsänderung und/oder Radialverstellung erforderlichen Bewegungen der Arme ohne Einflussnahme der Wendesteuerkurvenpaare gestatten. Auf diese Weise wird jede Umdrehung des Einlaufsterns in aufeinanderfolgende Sektionen unterteilt, in denen voneinander unabhängig die Übernahme, das Wenden und schließlich die Übergabe gesteuert werden. Diese individuellen Bewegungsabläufe stören einander nicht und lassen sich sehr feinfühlig und präzise steuern.

Ein kompakter Aufbau wird mit der zwischen den Gehäusewänden liegenden Trägerscheibe erreicht, wobei die Gehäusewände die stationären Steuerkurven enthalten können.

Zweckmäßigerweise umfasst der Wendesteuermechanismus eine Art Triebstockverzahnung, bei der die Rollenpaare des Rollensterns auf den Steuerkurven des Wende-Steuerkurvenpaares laufen. Die Bewegungssteuerung erfolgt mit einem exakt vorbestimmbaren Verlauf, wobei wiederum die Drehbewegung des Einlaufsterns benutzt wird. Jeder Halter kann bei einem Umlauf des Einlaufsterns um 180° verschwenkt, über 360° durchgedreht oder, falls zweckmäßig, nach Übergabe seines Vorformlings in leerem Zustand wieder in die Ausgangsposition zurückgedreht werden. Zum Wenden wird eine 180° Drehbewegung um die Wendeachse bewirkt. Es liegt auf der Hand, dass die Steuerkurven des Wende-Steuerkurvenpaares nur dort am Einlaufstern vorgesehen sind, wo tatsächlich eine Drehbewegung des Halters zu veranlassen oder zu steuern ist. Um unkontrollierbare Eigenbewegungen der Halter zu vermeiden, könnten die Wende-Steuerkurven über den gesamten Umfang des Einlaufsterns verlaufen.

Eine Drehlagerung des Rollensterns im Arm sichert die einwandfreie Position des Halters und ermöglicht seine leichtgängige Verdrehung um die Wendeachse. Der Ausleger am Rollenstern trägt den Halter, wobei der Halter und/oder der Ausleger zum Umrüsten des Einlaufsterns abnehmbar und/oder verstellbar ausgebildet sein kann (können).

Eine sichere Positionierung jedes Vorformlings wird mit einem Halter erzielt, der als symmetrische oder asymmetrische Greifzange ausgebildet ist, deren Greifarme an dem Ausleger gehaltert und durch eine Feder beispielsweise in Schließrichtung beaufschlagt sind. Auf diese Weise lässt sich jeder Vorformling bereits durch die Überschneidung der jeweiligen Bewegungsbahnen in die Greifzange einbringen und daraus lösen. Alternativ könnten die Greifzangen aber auch individuell gesteuert werden.

Um vor allem radiale Verstellbewegungen der Halter so wenig wie möglich durch den Wendesteuermechanismus zu beeinflussen, sollten in den Drehbereichen des Einlaufsterns, in denen keine Wendedrehbewegungen des Halters eingesteuert zu werden brauchen, ebene Gleitflächen vorgesehen sein, an denen der Rollenstern in Führungsrichtung der Geradführung leichtgängig verschoben werden kann. Diese Gleitflächen bilden auch zusätzliche Führungen gegen Vibrationen der Halter.

Anhand der Zeichnung wird eine Ausführungsform des Erfindungsgegenstandes erläutert. Es zeigen:
- Fig. 1: einen Abschnitt einer Blas-Vorformlings-Förderstrecke mit einem Einlaufstern, in schematischer Draufsicht und unter Weglassung einer oberen Gehäusewand des Einlaufsterns,
- Fig. 2: einen Vertikalschnitt des Einlaufsterns von Figur 1,
- Fig. 3: eine Draufsicht zu Figur 2,
- Fig. 4: eine vergrößerte Axialschnittansicht des Einlaufsterns, und
- Fig. 5: eine weitere, vergrößerte Axialteilschnittsansicht des Einlaufsterns.

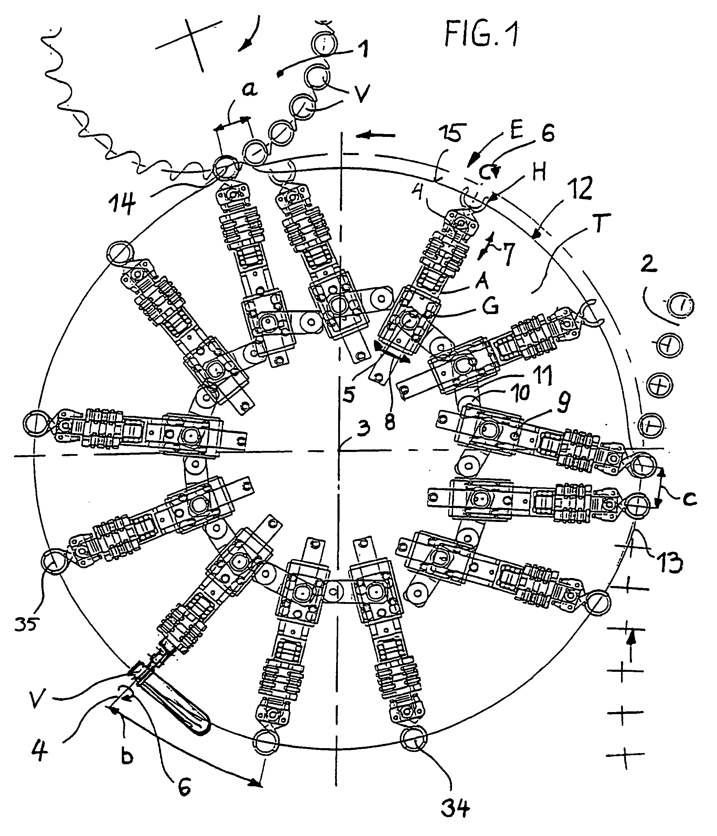

In Figur 1 ist ein Einlaufstern E vorgesehen, der Blas-Vorformlinge V aufeinanderfolgend von einem Zuführstern 1 mit vorbestimmten Übernahmeabständen a übernimmt, diese wendet, und nachfolgend an eine Bearbeitungsstation 2, z.B. ein Heizrad, mit ebenfalls festgelegten Übernahmeabständen c übergibt. Die jeweiligen Drehrichtungen sind durch Pfeile angedeutet.

Der Einlaufstern E ist um eine beispielsweise vertikal angeordnete Drehachse 3 drehantreibbar und mit einer Vielzahl von Haltern H für die Vorformlinge V bestückt. Jeder Halter H ist am freien Ende eines Arms A um eine im wesentlichen zur Drehachse 3 radiale Wendeachse 4 drehbar gelagert. Der Arm A ist in einer Geradfuhrung G verschiebbar geführt. Die Geradführung G ist um eine zur Drehachse 3 im wesentlichen parallele Schwenkachse 5 relativ zu einer radialen Orientierung hin- und her schwenkbar. Die Wendedrehbewegung des Halters H ist mit einem Pfeil 6 angedeutet. Die radiale Verstellbewegung des Arms A ist mit einem Doppelpfeil 7 angedeutet. Die Verschwenkbarkeit der Geradführung G ist mit einem Doppelpfeil 8 angedeutet.

Zur Schwenkverstellung der Geradeführung G um die Schwenkachse 5 dient ein Kurvenfolgeglied 10 am Hebelarm 11. Zur Radialverstellung des Arms A in der Geradführung G dient ein Kurvenfolgeglied 9 am Arm A.

Bei einer Rotation des Einlaufsterns E werden die Abstände zwischen den Haltern H zwischen dem Übernahmeabstandswert a, einem Wendeabstandswert b und dem Übergabeabstandswert c verändert. Die Umlaufbahn der Halter H ist mit 12 angedeutet. Kurz vor dem Übernahmebereich wird jeder Halter H zunächst entlang einem Kreisbahnabschnitt 15 bewegt, ehe er einem Abschnitt 14 folgend nach außen verstellt wird, um einen Vorformling V zu übernehmen. Anschließend bewegt sich der Halter H entlang einer äußeren Kreisbahn, ehe er in einem Abschnitt 13 geringfügig noch weiter nach außen verstellt wird und der Bewegungsbahn in der Bearbeitungsstation 2 vorübergehend folgt. Danach wird der Halter wieder nach innen verstellt um entlang des Kreisbahnbabschnittes 15 zu laufen.

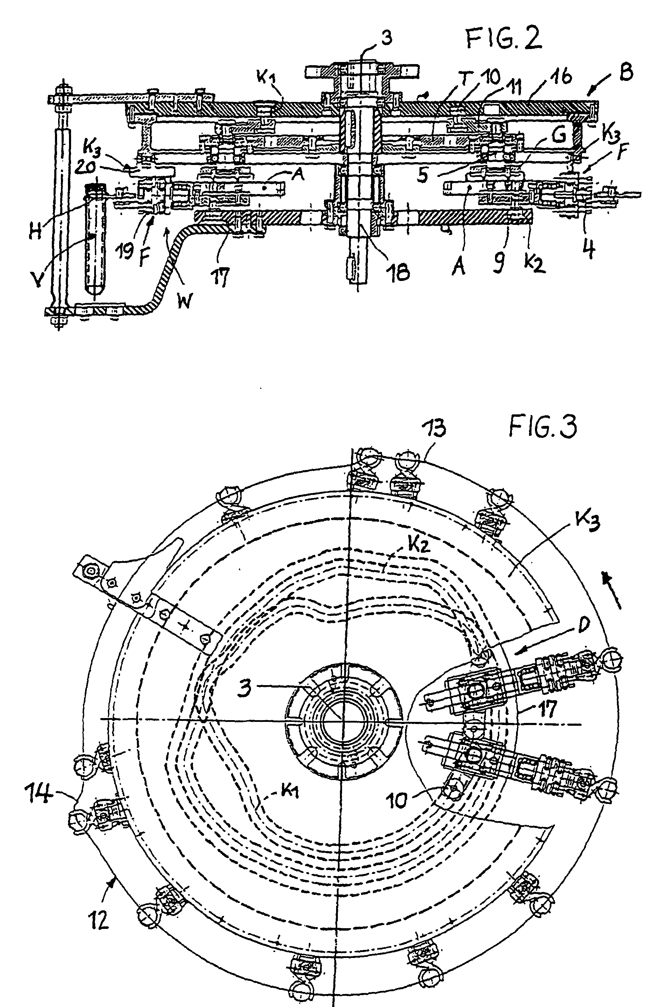

Nach der Übernahme wird in etwa über eine halbe Umdrehung des Einlaufsterns E jeder Halter um seine Wendeachse 4 über 180° gedreht, um den Vorformling V aus der Hängelage mit nach unten weisendem Boden in eine Überkopflage mit nach oben weisenden Boden zu überführen. Dabei stehen die Arme A im wesentlichen radial zur Drehachse 3. Nachdem der Wendevorgang abgeschlossen ist, wird jeder Arm A vor dem Erreichen des Übergabebereiches um die Schwenkachse 5 im Uhrzeigersinn verschwenkt und gleichzeitig in der Geradführung G nach außen verstellt, bis der Vorformling V schließlich übergeben ist. Anschließend an den Übergabebereich wird jeder Arm wieder im wesentlichen radial zur Drehachse 3 ausgerichtet und in der Geradführung G nach innen verschoben. Kurz vor erreichen des Übernahmebereichs wird der Arm A erneut im Uhrzeigersinn um die Schwenkachse 5 verschwenkt und nach außen gefahren, bis er einen Vorformling übernommen hat. Diese unterschiedlichen, zusätzlich zur Drehung des Einlaufsterns E stattfindenden Bewegungsabläufe werden aus der Drehbewegung des Einlaufsterns E abgeleitet, und zwar aus der Drehbewegung einer die Geradführungen G tragenden Trägerscheibe T relativ zu einem stationären Gehause B (Figur 2, 3).

Gemäß den Figuren 2 und 3 ist die Trägerscheibe T an einer im Gehäuse B drehgelagerten, von einem nicht dargestellten Antrieb angetriebenen Welle 18 angeordnet. Das Gehäuse B weist obere und untere Gehäusewände 16, 17 auf, die die Trägerscheibe T zwischen sich einschließen.

Zur Schwenksteuerung und Radialverstellung der Halter H mit den diesen tragenden Armen A ist eine Verstellvorrichtung D vorgesehen, die einen kombinierten Schwenksteuer- und Radialverstellmechanismus umfasst. In den Gehäusewänden 16, 17 sind stationäre Steuerkurven K1 und K2 vorgesehen, in die die Folgeglieder 9, 10 eingreifen. Der Verlauf der Steuerkurven K1, K2 ist so gestaltet, dass die vorerwähnten Bewegungsabläufe zum Verschwenken der Geradführungen G um ihre Schwenkachsen 5 und zum Radialverstellen der Arme A in gegenseitiger Überlagerung erzwungen werden, sobald sich die Trägerscheibe T in Relation zum stationären Gehäuse B dreht.

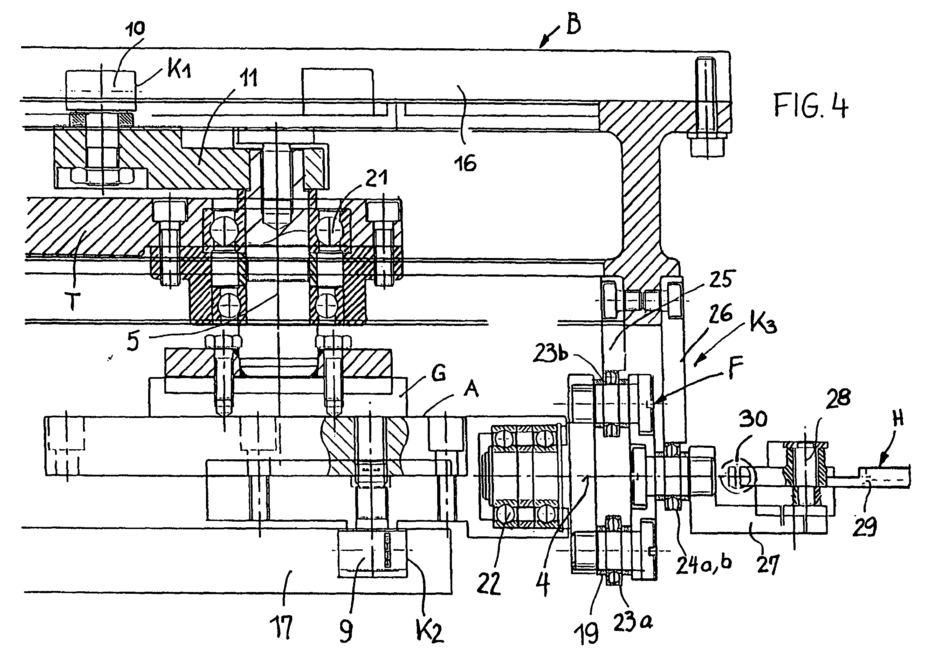

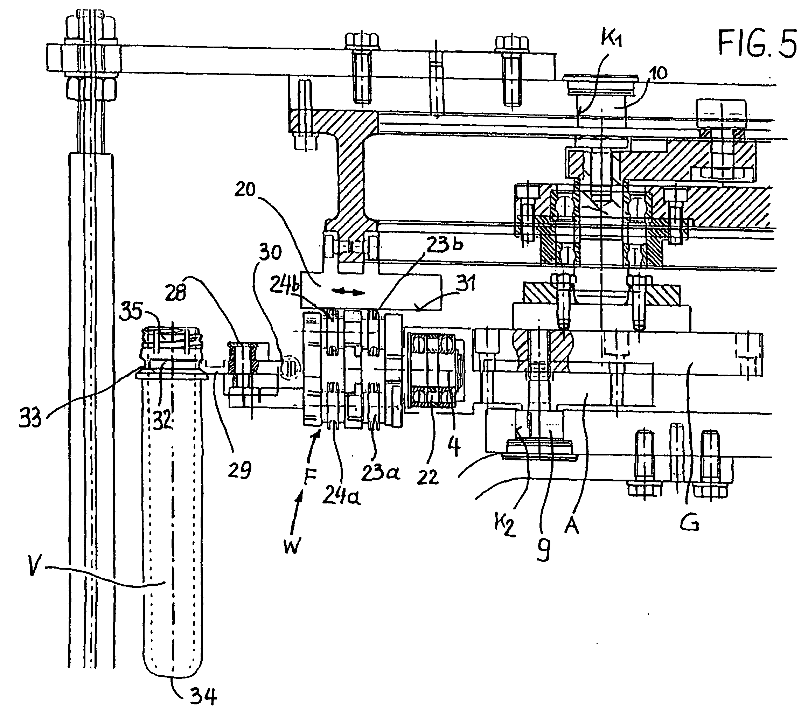

Der Wendesteuermechanismus W umfasst ein stationäres Kurvenpaar K3 für um die Wendeachse 4 drehbare Folgeglieder F, beispielsweise einen Rollenstern 19, der im Detail aus den Figuren 4 und 5 hervorgeht. Im Verlauf dieser Steuerkurven K3 kann ein einstückiger, ebener Führungsabschnitt 20 (Figur 2) vorgesehen sein, an dem das Folgeglied F mit dem Arm A radial zur Drehachse 3 verschiebbar anliegt. In Figur 3 ist gestrichelt der unrunde Verlauf der Steuerkurven K1, K2 und der im wesentlichen konzentrische Verlauf der Steuerkurven K3 angedeutet.

In Figur 4 ist der Hebelarm 11 für das Folgeglied 10 in der Steuerkurve K1 mit der die Schwenkachse 5 definierenden, in einer Drehlagerung 21 der Trägerscheibe T gelagerten Welle der Geradführung G verschraubt. Der in der Geradführung G in Figur 4 parallel zur Zeichenebene verschiebbar geführte Arm A enthält eine Drehlagerung 22, die die horizontale Wendeachse 4 definiert und den das Folgeglied F bildenden Rollenstern 19 lagert. Der Rollenstern 19 weist zwei Paare von Kurvenfolgegliedern 23a, b; 24a, b auf, die beispielsweise um 90° zueinander versetzt sind und auf Steuerkurven 25, 26 des-Steuerkurvenpaares K3 abrollen. Die zahnartigen Steuerkurven 25, 26 sind an der Gehäusewand 16 stationär und hochkant angebracht. Die beiden Paare 23a, b und 24a, b der Rollen des Rollensterns 19 sind in Richtung der Wendeachse 4 mit dem Abstand der Steuerkurven 25, 26 beabstandet. Innerhalb der Drehbereiche des Einlaufsterns E, in denen eine exakte Positionierung oder Drehung des Halters H um die Wendeachse 4 erforderlich ist, stehen mindestens zwei der Rollen 23a, b; 24a, b mit den Steuerkurven 25, 26 in Kontakt. Am Rollenstern 19 ist ein Ausleger 27 befestigt, der in Greifarmlagern 28 schwenkbare Greifarme 29 trägt, die durch eine Feder 30 in Schließrichtung vorgespannt sind.

Abhängig vom Verlauf der Steuerkurve K1 wird über das Folgeglied 10 die Schwenkbewegung der Geradführung G um die Schwenkachse 5 gesteuert. Abhängig vom Verlauf der Steuerkurve K2 wird über das Folgeglied 9 die radiale Stellung des Arms A eingestellt. Abhängig vom Verlauf der Steuerkurven 25, 26 wird über das Folgeglied F die Drehstellung oder Drehbewegung des Halters H um die Wendeachse 4 gesteuert.

In Figur 5 ist der Führungsabschnitt 20 vergrößert hervorgehoben, der in einer Unterbrechung der Steuerkurven 25, 26 vorgesehen ist, um das Folgeglied F in einer bestimmten Drehposition um die Wendeachse 4 zu positionieren und gleichzeitig zumindest die radiale Verstellung des Arms A, veranlasst durch das Folgeglied 9 in der Steuerkurve K2, über den gewünschten radialen Verstellbereich zuzulassen. Bei einer solchen Verstellung, gegebenenfalls bei gleichzeitiger Verstellung der Geradführung G um die Schwenkachse 5, gleiten die Rollen 23b, 24b an einer ebenen Gleitfläche 31 des Führungsabschnittes 20, ohne dass sich die Drehposition des Halters H bzw. des Vorformlings V um die Wendeachse 4 ändert.

Die Steuerkurven 25, 26, einschließlich des Führungsabschnittes 20, brauchen sich nicht über die gesamte Umfangslänge zu erstrecken. Falls Bewegungsbereiche vorgesehen sind, in denen keine Positionierung des Halters H um die Wendeachse 4 notwendig ist, können die Steuerkurven 25, 26 bzw. die Gleitfläche 31 ausgespart sein.

Die Greifarme 29 fassen den Vorformling V mit Haltebacken 32 im Bereich eines Kragens 33 unterhalb eines ein Gewinde aufweisenden Mündungsbereiches 35. Je nachdem welche Drehposition das Folgeglied F um die Wendeachse 4 für den Halter H eingestellt hat, weist der Boden 34 des Vorformlings V nach unten (wie in den Figuren 2 und 5 gezeigt) oder wird der Vorformling V um die Wendeachse 4 in die Überkopflage mit dem Boden 34 nach oben gewendet, oder wird der Vorformling V in der Überkopflage übergeben.

Die Greifarme 29 können einen symmetrischen oder asymmetrischen Halter H definieren. Die Haltebacken 32 lassen sich in der durch die Feder 30 eingestellten Schließstellung auseinander drücken, entweder direkt durch den ankommenden Vorformling V oder mittels einer nicht gezeigten Steuervorrichtung. Handelt es sich um symmetrische Halter, dann können diese nach der Übergabe in der Übergabeposition um die Wendeachse 4 verbleiben. Alternativ ist es möglich, zwischen der Übergabe und der Übernahme die Halter H wieder in die Ausgangsposition um die Wendeachse 4 zurück oder vorwärts zu drehen. Asymmetrische Halter sollten bei der Übernahme jeweils in derselben Position stehen.

## Patentansprüche

1. Verfahren zum Wenden von aufeinanderfolgend zu Bearbeitungsstationen geförderten Blas-Vorformlingen in einem rotierenden Einlaufstern um zumindest in etwa zur Drehachse des Einlaufsterns radiale Wendeachsen aus einer Hängelage mit nach unten weisendem Boden in eine Überkopflage mit nach oben weisendem Boden, **dadurch gekennzeichnet, dass** im Einlaufstern während dessen Rotation der in Drehrichtung um die Drehachse gesehene Abstand zwischen benachbarten Wendeachsen verändert wird.

2. Verfahren nach Anspruch 1, **dadurch gekennzeichnet, dass** wenigstens einmal pro Rotation des Einlaufsterns zusätzlich der Radialabstand jedes Vorformlings von der Drehachse verändert wird.

3. Verfahren nach Anspruch 1, **dadurch gekennzeichnet, dass** der in Drehrichtung gesehene Abstand benachbarter Wendeachsen zwischen einem Ubernahme-Abstandswert, einem Übergabe-Abstandswert und einem Wende-Abstandswert verändert wird.

4. Einlaufstern (E) für Blas-Vorformlinge (V), mit um die Einlaufstern-Drehachse (3) bewegbaren und um zumindest im Wesentlichen zur Drehachse (3) radiale Wendeachsen (4) drehbaren Haltern (H), denen die Vorformlinge (V) mit Übernahmeabständen (a) und in Hängelage mit nach unten weisendem Boden (34) einzeln zuteilbar, mit denen die Vorformlinge (V) um die Wendeachsen (4) wendbar, und mit denen die gewendeten Vorformlinge (V) in Überkopflage mit nach oben weisendem Boden (34) mit Abgabeabständen (c) abgebbar sind, sowie mit einem den Haltern (H) zugeordneten Wendesteuermechanismus (W), **dadurch gekennzeichnet, dass** am Einlaufstern (E) in Wirkverbindung mit den Haltern (H) eine Verstellvorrichtung (D) angeordnet ist, mit der der in Drehrichtung um die Drehachse gesehene Abstand zwischen benachbarten Wendeachsen (4) zwischen dem Übernahme-Abstandswert (a), dem Abgabe-Abstandswert (c) und wenigstens einem Wende-Abstandswert (b) der Halter (H) veränderbar ist.

5. Einlaufstern nach Anspruch 4, **dadurch gekennzeichnet, dass** die Verstellvorrichtung (D) einen kombinierten Schwenksteuer- und Radialverstellmechanismus für die Halter (H) an ihren Wendeachsen (4) tragende Arme (A) aufweist, der ein stationäres Steuerkurvenpaar (K1, K2) und pro Arm (A) wenigstens ein Schwenk- und wenigstens ein Radial-Kurvenfolgeglied (9, 10) umfasst.

6. Einlaufstern nach Anspruch 4, **dadurch gekennzeichnet, dass** der Wendesteuermechanismus (W) ein stationäres Wendesteuer-Kurvenpaar (K3; 25, 26) und mit den Haltern (H) um die Wendeachsen (4) drehbare Wende-Kurvenfolgeglieder (F), vorzugsweise Rollensterne (19), umfasst.

7. Einlaufstern nach wenigstens einem der Ansprüche 4 bis 6, **dadurch gekennzeichnet, dass** eine um die Drehachse (3) drehbare Trägerscheibe (T) in regelmäßigen Umfangsabständen Geradführungen (G) trägt, die relativ zu einer radialen Ausrichtung um zu der Drehachse (3) parallele Schwenkachsen (5) schwenkbar sind, dass in jeder Geradführung (G) ein Arm (A) verschiebbar geführt ist, dass ein mit der Geradführung (G) verbundener Hebelarm (11) das Schwenkkurvenfolgeglied (10) trägt, dass das Radialkurvenfolgeglied (9) am Arm (A) angeordnet ist, und dass die Steuerkurven (K3; 25, 26) des Wende-Steuerkurvenpaares zumindest bereichsweise mit zur Führungsrichtung der Geradführung (G) parallelen, Abstandsverstellbereiche definierenden Gleitflächen (31) für die Wende-Kurvenfolgeglieder (F) ausgebildet sind.

8. Einlaufstern nach Anspruch 7, **dadurch gekennzeichnet, dass** die Trägerscheibe (T) mit ihrer Antriebswelle (18) in einem stationären, seitlich offenen Gehäuse (B) gelagert ist, und dass das Wende-Steuerkurvenpaar (K3) und das Steuerkurvenpaar (K1, K2) in oberhalb und unterhalb der Trägerscheibe liegenden Gehäusewänden (16, 17) angeordnet sind.

9. Einlaufstern nach Anspruch 6, **dadurch gekennzeichnet, dass** jeder Rollenstern (19) auf einem gemeinsamen Teilkreisdurchmesser zwei Rollenpaare (23a, b; 24a, b) aufweist, die zueinander um 90° versetzt und in zwei mit dem Radialabstand der Steuerkurven (25, 26) des Wende-Steuerkurvenpaares (k3) beabstandeten parallelen Ebenen angeordnet sind.

10. Einlaufstern nach wenigstens einem der Ansprüche 6 bis 9, **dadurch gekennzeichnet, dass** der Rollenstern (19) im Arm (A) um die Wendeachse (4) drehbar gelagert ist und den Halter (H) an einem Ausleger (27) trägt.

11. Einlaufstern nach Anspruch 10, **dadurch gekennzeichnet, dass** der Halter (H) eine symmetrische oder asymmetrische Greifzange mit zwei relativ zueinander verschwenkbaren Greifarmen (29) ist, die in Greifarmlagern (28) an dem Ausleger (27) gehaltert und durch eine Feder (30) in Schließrichtung beaufschlagt sind.

12. Einlaufstern nach Anspruch 7, **dadurch gekennzeichnet, dass** die Gleitfläche (31) an einem Führungsabschnitt (20) geformt ist, der übergangslos eine in Drehrichtung der Trägerscheibe (T) vorgesehene Unterbrechung des Wende-Steuerkurvenpaares (K3) ausfüllt, und dass, vorzugsweise, die Gleitfläche (31) radial zur Drehachse (3) eine größere Ausdehnung besitzt als die Steuerkurven (25, 26) des Wende-Steuerkurvenpaares (K3).

## Claims

1. Method for turning blow-moulding preforms successively conveyed to processing stations in a revolving infeed star wheel about turning axes at least approximately radial to the axis of rotation of the infeed star wheel, from a suspended position with their bottom pointing downwards into an upside-down position with their bottom pointing upwards, **characterized in that** the interval between adjacent turning axes within the infeed star wheel, viewed in the direction of rotation about the axis of rotation [of the infeed star wheel], is changed during the rotation of the infeed star wheel.

2. Method according to Claim 1, **characterized in that** the radial distance of each preform from the axis of rotation [of the infeed star wheel] is moreover changed at least once per revolution of the infeed star wheel.

3. Method according to Claim 1, **characterized in that** the interval between adjacent turning axes, viewed in the direction of rotation [of the infeed star wheel], is changed between a pick-up interval-value, a delivery interval-value, and a turning interval-value.

4. Infeed star wheel (E) for blow-moulding preforms (V), with holders (H) which are movable about the axis of rotation (3) of the infeed star wheel and rotatable about turning axes (4) at least substantially radial to the axis of rotation (3), the preforms (V) being individually allocatable to the holders (H) at pick-up intervals (a) and in the suspended position with their bottom (34) pointing downwards, and rotatable by the holders (H) about the turning axes (4), and the upended preforms (V) being deliverable in the upside-down position with their bottom (34) pointing upwards; and also with a turning control mechanism (W) assigned to the holders (H); **characterized in that** by means of a positioning apparatus (D) arranged on the infeed star wheel (E) and in active connection with the holders (H) the interval between adjacent turning axes (4), viewed in the direction of rotation about the axis of rotation [(3)], can be varied between the pick-up interval-value (a), the delivery interval-value (c), and at least one turning interval-value (b), of the holders (H).

5. Infeed star wheel according to Claim 4, **characterized in that** the positioning apparatus (D) has a combined slewing-control and radial-positioning mechanism for arms (A) carrying the holders (H) on their turning axes (4) which comprises a pair of stationary cams (K1, K2) and at least one slewing cam follower and at least one radial cam follower (9, 10) for each arm (A).

6. Infeed star wheel according to Claim 4, **characterized in that** the turning control mechanism (W) comprises a pair of stationary turning cams (K3; 25, 26) and turning cam followers (F), preferably roller-tipped star wheels (19), rotatable with the holders (H) about the turning axes (4).

7. Infeed star wheel according to at least one of Claims 4 to 6, **characterized in that** a carrier disc (T) rotatable about the axis of rotation (3) carries linear guides (G) at regular circumferential intervals that can be slewed relative to a radial orientation about slewing axes (5) parallel with the axis of rotation (3), **in that** an arm (A) is displaceably guided in each linear guide (G), **in that** a lever arm (11) connected to the linear guide (G) carries the slewing cam follower (10), **in that** the radial cam follower (9) is arranged on the arm (A), and **in that** the cams (K3; 25, 26) of the turning cam pair are at least partly configured with slide faces (31) for the turning cam followers (F) defining ranges of distance adjustment parallel with the guiding direction of the linear guide (G).

8. Infeed-star wheel according to Claim 7, **characterized in that** the carrier disc (T) is mounted by its drive shaft (18) in a stationary, laterally open housing (B), and **in that** the turning cam pair (K3) and the cam pair (K1, K2) are arranged in housing walls (16, 17) located above and below the carrier disc.

9. Infeed star wheel according to Claim 6, **characterized in that** each roller-tipped star wheel (19) has two roller pairs (23a, b; 24a, b) on a common pitch diameter which are offset by 90° relative to one another and are arranged in two parallel planes spaced apart with the same radial distance as the cams (25, 26) of the turning cam pair (K3).

10. Infeed star wheel according to at least one of Claims 6 to 9, **characterized in that** the roller-tipped star wheel (19) is mounted rotatably about the turning axis (4) in the arm (A), and carries the holder (H) on an outrigger (27).

11. Infeed star wheel according to Claim 10, **characterized in that** the holder (H) is a pair of symmetrical or asymmetrical gripper tongs with two gripper arms (29) pivotable relative to one another which are held in gripper-arm bearings (28) on the outrigger (27) and urged in the closing direction by a spring (30).

12. Infeed star wheel according to Claim 7, **characterized in that** the slide face (31) is formed on a guide section (20) which seamlessly fills a gap in the turning cam pair (K3) provided in the direction of rotation of the carrier disc (T), and **in that**, preferably, the slide face (31) has a greater extent radially to the axis of rotation (3) than the cams (25, 26) of the turning cam pair (K3).

## Revendications

1. Procédé pour, dans un dispositif d'alimentation en étoile les amenant successivement à des postes d'usinage, faire pivoter des ébauches de soufflage autour d'axes de pivotement perpendiculaires à l'axe de rotation du dispositif d'alimentation en étoile, en les faisant passer d'une position suspendue avec le fond regardant vers le bas à une position tête en bas, avec le fond regardant vers le haut
**caractérisé en ce que**
pendant la rotation du dispositif d'alimentation en étoile, la distance observée selon la direction de rotation autour de l'axe varie entre les axes de pivotement voisins.

2. Procédé selon la revendication 1,
**caractérisé en ce que**
la distance radiale par rapport à l'axe, de chaque ébauche de soufflage varie au moins une fois par tour de rotation du dispositif d'alimentation en étoile.

3. Procédé selon la revendication 1,
**caractérisé en ce que**
la distance, observée selon la direction de rotation entre les axes de pivotement voisins, varie entre une valeur de prise en charge, une valeur de transfert et une valeur de pivotement.

4. Dispositif d'alimentation en étoile (E) pour des ébauches de soufflage (V) dans lequel :
- des supports (H) peuvent tourner chacun autour de l'axe de rotation de l'étoile d'alimentation (3) et également autour d'axes de pivotement (4) radiaux par rapport à l'axe de rotation (3),
- à ces supports, peuvent être attribuées individuellement les ébauches (v) pour y être suspendues avec le fond (34) dirigé vers le bas, avec des distances de prise en charge (a),
- ces supports peuvent faire pivoter les ébauches (V) autour des axes de pivotement (4) pour les amener et les transférer ainsi selon des distances de transfert (c) en position tête en bas avec leur fond (34) regardant vers le haut,
- un mécanisme de commande de pivotement (W) est associé aux supports (H),
**caractérisé en ce que**
sur le dispositif d'alimentation en étoile (E) est monté, en coopération avec les supports (H), un dispositif de déplacement (D) permettant de faire varier la distance observée selon la direction périphérique autour de l'axe de rotation, séparant des axes de pivotement voisins (4), entre la valeur de prise en charge (a), la valeur de transfert (c) et au moins une valeur de pivotement (b) des supports (H).

5. Dispositif d'alimentation en étoile selon la revendication 4,
**caractérisé en ce que**
le dispositif de déplacement (D) présente, sur ses bras (A) portant des axes de pivotement (4), un mécanisme combinant la commande de basculement et le déplacement radial des supports (H), ce mécanisme comprenant une paire fixe de pistes de commande (K1, K2) et pour chaque bras (A) au moins un organe (9) suiveur de piste assurant le basculement et au moins un organe (10) suiveur de piste assurant le déplacement radial.

6. Dispositif d'alimentation en étoile selon la revendication 4,
**caractérisé en ce que**
le mécanisme de commande de pivotement (W) comprend une paire fixe de pistes de commande de pivotement (K3 ; 25, 26), et des organes suiveurs de pistes (F) pouvant tourner avec les supports (H) autour des axes de pivotement (4), de préférence des étoiles à galets (19).

7. Dispositif d'alimentation en étoile selon au moins une des revendications 4 à 6,
**caractérisé en ce que**
- un disque porteur (T) pouvant tourner autour de l'axe (3) porte des guidages rectilignes (G) répartis régulièrement en périphérie qui peuvent basculer par rapport à la direction radiale correspondante autour d'axes de basculement (5) parallèles à l'axe de rotation (3),
- le long de chaque guidage rectiligne (G) peut coulisser un bras (A),
- à chaque guidage rectiligne (G) est relié un bras de levier (11) qui porte un organe suiveur (10) de la piste de basculement, tandis que l'organe suiveur (9) de la piste de déplacement radial est monté sur le bras (A),
- les pistes de commande (K3 ; 25, 26) de la paire de pistes de commande de pivotement sont au moins localement constituées par des portées de glissement (31) parallèles à la direction du guidage rectiligne (G) et qui définissent des zones de réglage de distance pour les organes suiveurs (F) des pistes de pivotement.

8. Dispositif d'alimentation en étoile selon la revendication 7,
**caractérisé en ce que**
le disque porteur (T) avec son arbre d'entraînement (18) est monté dans un boîtier (B) fixe, ouvert latéralement, la paire de pistes de commande de pivotement (K3) et la paire de pistes de commande (K1, K2) étant montées sur des parois de boîtier (16, 17) situées au-dessus ou en dessous du disque porteur.

9. Dispositif d'alimentation en étoile selon la revendication 6,
**caractérisé en ce que**
chaque étoile à galets (19) présente, sur une partie de cercle, deux paires de galets (23a, b ; 24a, b) décalées de 90° l'une par rapport à l'autre et disposées dans deux plans parallèles espacés de la paire de pistes de commande de pivotement (k3) de la distance radiale des pistes de commande (25, 26).

10. Dispositif d'alimentation en étoile selon au moins une des revendications 6 à 9,
**caractérisé en ce que**
la paire de galets (19) est montée sur l'arbre (A) en rotation autour de l'axe de pivotement (4) et porte le support (H) sur un avant-bras (27).

11. Dispositif d'alimentation en étoile selon la revendication 10,
**caractérisé en ce que**
le support (H) est une pince de saisie symétrique ou asymétrique comportant deux bras de saisie (29) pouvant basculer l'un par rapport à l'autre, montés sur des paliers (28) situés sur l'avant-bras (27) et actionnés par un ressort (30) dans le sens de fermeture.

12. Dispositif d'alimentation en étoile selon la revendication 7,
**caractérisé en ce que**
la portée de glissement (31) est réalisée sur une partie de guidage (20) qui comble sans transition une interruption de la paire de pistes de commande de pivotement (K3) prévue dans le sens de rotation du disque porteur (T), cette portée de glissement (31) présentant radialement par rapport à l'axe (3) une plus grande étendue que les pistes de commande (25, 26) de la paire de pistes de commande (K3).
